Europäisches Patentamt

European Patent Office

Office européen des brevets

(11) Veröffentlichungsnummer: **0 247 022**

**A2**

(12) **EUROPÄISCHE PATENTANMELDUNG**

(21) Anmeldenummer: **87890069.5**

(22) Anmeldetag: **08.04.87**

(51) Int. Cl.³: **B 23 H 3/00**
**B 23 H 11/00**

(30) Priorität: **23.04.86 AT 1086/86**

(43) Veröffentlichungstag der Anmeldung:
**25.11.87 Patentblatt 87/48**

(84) Benannte Vertragsstaaten:
**BE CH DE ES FR GB GR IT LI LU NL SE**

(71) Anmelder: **VOEST-ALPINE Aktiengesellschaft**
**Friedrichstrasse 4**
**A-1011 Wien(AT)**

(72) Erfinder: **Müller, Karl-Heinz, Dipl.-Ing.**
**Klagenfurterstrasse 2**
**A-9170 Ferlach(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) Verfahren zum elektrochemischen Senken von spanabhebenden Werkzeugen aus Schnellarbeitsstählen und Hartmetallen.

(57) Das Verfahren zum elektrochemischen Senken bzw. Elysieren von spanabhebenden Werkzeugen aus Schnellarbeitsstählen wird so durchgeführt, daß ein gehärteter und angelassener stabförmiger Rohling (6) relativ zu einer Elektrode bewegt wird. Hiebei kann entweder der stabförmige Rohling (6) oder die Elektrode zu rotierender und/oder Verschiebebewegung in Achsrichtung des Rohlings (6) angetrieben sein. Als Elektrode wird eine als Kathode gestaltete Schablone (9) eingesetzt, welche die gewünschte Kontur für die Herstellung von schraubenlinienförmig verlaufenden Nuten (13) an der Mantelfläche des Rohlings (6) aufweist. Die Schablone (9) wird hiebei zu einer Bewegung in Achsrichtung (11) des stabförmigen Rohlings (6) und bevorzugt zu hin- und hergehender Bewegung angetrieben, wohingegen der Rohling (6) selbst zu drehender Bewegung (7) angetrieben wird.

FIG. 1

Verfahren zum elektrochemischen Senken von spanabhebenden Werkzeugen aus Schnellarbeitsstählen und Hartmetallen

Die Erfindung bezieht sich auf ein Verfahren zum elektrochemischen Senken von spanabhebenden Werkzeugen aus Schnellarbeitsstählen oder elektrisch leitenden Hartmetallen, insbesondere von Fräsern für Schrupp- und Schlichtarbeiten, Bohrern oder dgl.

Schnellarbeitsstähle bezeichnen allgemein eine Gruppe von legierten Stählen, wie sie beispielsweise unter den Normbezeichnungen S 18-0-1 mit 18 Gew.-% Wolfram 1,1 Gew.-% Vanadium, 4,3 Gew.-% Chrom und 0,75 Gew.-% Kohlenstoff gefertigt werden. Weiters sind Stähle mit den Zusammensetzungen 18 Gew.-% Wolfram, 1,5 Gew.-% Vanadium, 9,5 Gew.-% Kobalt und 0,6 Gew.-% Molybdän bei im übrigen gleichen Kohlenstoff- und Chromgehalt mit der Normbezeichnung S 18-1-2-10 als Schnellarbeitsstähle häufig im Einsatz. Auch höher gekohlte Stähle, beispielsweise der Stahl S 10-4-3-10 mit 9,8 Gew.-% Wolfram, 3,8 Gew.-% Molybdän, 3,2 Gew.-% Vanadium, 10,4 Gew.-% Kobalt und 1,26 Gew.-% Kohlenstoff sowie 4,3 Gew.-% Chrom, sowie Werkstoffe der DIN- Normenbezeichnung S 6-5-3, S 6-5-2-5 und S 12-0-5-5, welcher letztgenannte Stahl wiederum einen relativ hohen Kohlenstoffgehalt von etwa 1,5 Gew.-% aufweist, werden häufig als Schnellarbeitsstähle für den Werkzeugbau verwendet. Derartige Stahlsorten wurden für die Herstellung von spanabhebenden Werkzeugen selbst spanabhebend bearbeitet, um die dem Werkzeug entsprechende Kontur zu erzielen. Nachteilig bei einer spanabhebenden Bearbeitung derartiger Schnellarbeitsstähle ist aber die Tatsache, daß die Festigkeitseigenschaften nahe der Oberfläche bei der Bearbeitung verändert werden und in der Regel leiden.

Die Erfindung zielt nun darauf ab, ein einfaches wirtschaftliches und rasches Verfahren zu schaffen, bei welchem Schnellarbeitsstähle unmittelbar mit ihren gewünschten

- 2 -

Werkstoffeigenschaften bearbeitet werden können und eine nochmalige Behandlung zum Zwecke der Festigkeitswiederherstellung entfallen kann. Zur Lösung dieser Aufgabe besteht die Erfindung im wesentlichen darin, daß ein gehärteter und angelassener stabförmiger Rohling durch eine der gewünschten Kontur entsprechende, in an sich bekannter Weise als Kathode geschaltete, Schablone überfahren wird und daß das in an sich bekannter Weise als Anode geschaltete Werkstück und/oder die Schablone zu drehender und/oder in Achsrichtung des Rohlings hin- und hergehender Bewegung angetrieben wird (werden).

Auf diese Weise wird das an sich bekannte und unter der Bezeichnung Elysierverfahren für die Bearbeitung von beliebigen Werkstücken bereits eingesetzte Verfahren auch für die Herstellung von spanabhebenden Werkzeugen einsetzbar gemacht, wobei sich insbesondere im Zusammenhang mit dem Einsatz von Schnellarbeitsstählen als Rohling die Möglichkeit ergibt, unmittelbar einen gehärteten und angelassenen stabförmigen Rohling zu verwenden. Ein derartiger gehärteter und angelassener stabförmiger Rohling müßte bei einer spanabhebenden Bearbeitung zur Erzielung der Werkzeugkontur in der Folge neuerlich gehärtet und angelassen werden, wobei erfindungsgemäß durch die elektrochemische Ablösung die Materialeigenschaften der Werkzeugoberfläche unverändert erhalten bleiben. Neben der im Vergleich zur spanabhebenden Bearbeitung rascheren Verfahrensweise, wie sie durch das elektrochemische Senken möglich ist, ergibt sich darüberhinaus somit auch noch der Vorteil, daß zeitraubende und aufwendige Nachbehandlungsverfahren für die Wiederherstellung geeigneter Oberflächenqualitäten entfallen können.

Die für Fräser erforderlichen komplexen Außenkonturen können bei entsprechender Steuerung des Vorschubes bzw. Vortriebes des Werkstückes relativ zu den Schablonen relativ leicht nachvollzogen werden. Zu diesem Zweck kann bevorzugt so vorgegangen werden, daß der Rohling relativ zu der oder den Schablonen gedreht und gleichzeitig der Rohling und/oder die Schablonen in Achsrichtung verschoben wird (werden). Die Arbeitsleistung läßt sich hiebei dadurch wesentlich steigern, daß in Achsrichtung des Rohlings wenigstens zwei Schablonen angeordnet sind.

Mit Schablonen der eingangs genannten Art, welche selbst als Kathode geschaltet werden und auf diese Weise das elektrochemische Ablösen von der Elektrode gegenüberliegendem Material ermöglichen, lassen sich schraubenlinienförmig verlaufenden Nuten aus der Oberfläche des Werkzeuges abtragen, wobei durch entsprechende Steuerung der Vorschubbewegung in axialer Richtung auch Verzahnungen an der Außenseite des Werkstückes angebracht werden können. Wenn derartige Verzahnungen lediglich an der Außenkontur des Werkstückes, nicht aber am Grund der Nuten vorliegen sollen, ist es vorteilhaft, wenn, wie es einer bevorzugten Verfahrensweise entspricht, Schrupp- und/oder Schlichtverzahnungen in von der konturgebenden Behandlung gesonderten Arbeitsschritten abgetragen werden. Da die elektrochemische Reaktion immer nur in relativ geringem Abstand zu der entsprechenden, als Kathode geschalteten Elektrode bzw. Schablone ablaufen, kann bei einem derartigen gesonderten zweiten Arbeitsvorgang die Schrupp- und/oder Schlichtverzahnung auf die Außenseite bzw. Umfangskontur des Werkzeuges beschränkt werden, wobei die bereits abgetragenen Nuten von einer Verzahnung frei bleiben.

In allen Fällen bietet das erfindungsgemäße Verfahren die Möglichkeit, Schnellarbeitsstähle in gehärtetem und angelassenem Zustand unmittelbar der formgebenden Bearbeitung zu unterwerfen, wobei eine nachfolgende Temperaturbehandlung zur Wiederherstellung der erforderlichen Härte- bzw. Festigkeitseigenschaften der Oberfläche entfallen kann.

- 4 -

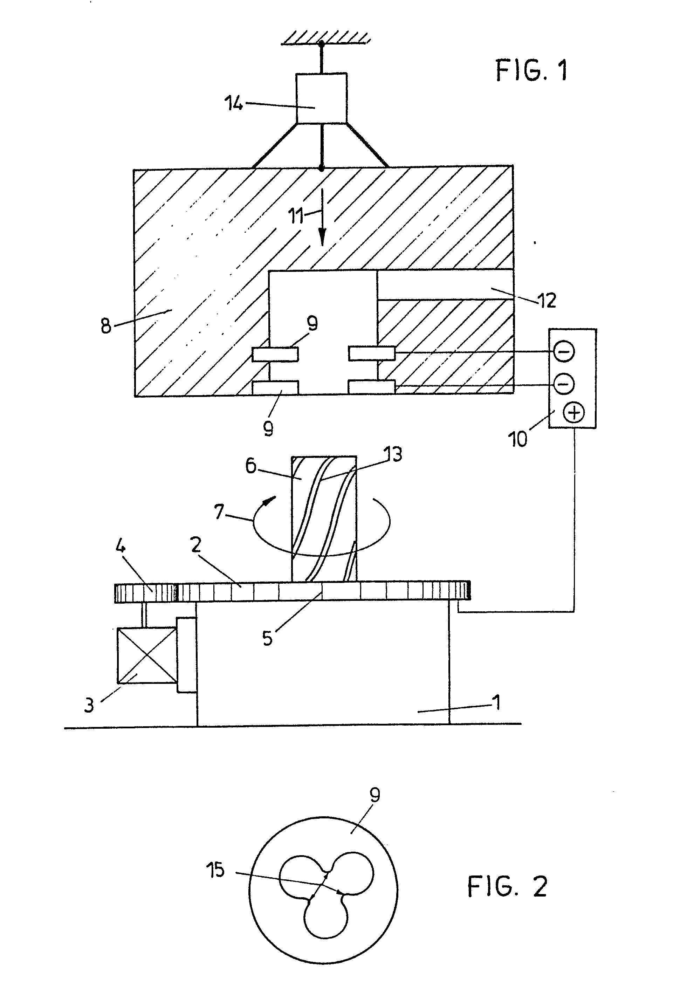

Die Erfindung wird nachfolgend an Hand eines in der Zeichnung schematisch dargestellten Ausführungsbeispieles näher erläutert. In der Zeichnung zeigt Fig.1 eine schematische Anordnung von Werkstück und Schablone in einer hiefür geeigneten Vorrichtung und Fig.2 eine schematische Draufsicht auf eine Schablone, wie sie erfindungsgemäß eingesetzt werden kann.

In Fig.1 ist auf einem Grundrahmen 1 eine drehbare Platte 2 angeordnet, deren Antrieb durch einen Motor 3 sichergestellt wird. Zu diesem Zweck weist der Motor 3 ein Ritzel 4, welches mit einer Außenverzahnung 5 der drehbaren Platte 2 kämmt, auf. Auf der drehbaren Platte 2 ist ein stabförmiger Rohling 6 angeordnet, welcher im Sinne des Pfeiles 7 oder entgegen der Richtung dieses Pfeiles in Umdrehung versetzbar ist. Die Rotationsgeschwindigkeit ist durch eine einfache, nicht dargestellte Steuerung des Motors 3 einstellbar.

Oberhalb des Rohlings 6 ist ein Support 8 angeordnet, welcher Schablonen 9 trägt. Die Schablonen 9 sind mit dem Minuspol einer elektrischen Gleichspannungsquelle 10 verbunden und somit als Kathode geschaltet. Der Pluspol der Gleichspannungsquelle 10 ist mit der drehbaren Plattform 2 verbunden, sodaß das Werkstück 6 in leitendem Kontakt mit dem Pluspol der Gleichspannungsquelle 10 steht.

Der Support 8 weist einen Hohlraum auf, in welchen das Werkstück 6 bei Absenken des Supportes 8 in Richtung des Pfeiles 11 eintauchen kann. In diesen Hohlraum mündet eine Zuleitung 12 für einen Elektrolyten, wobei als Elektrolytlösungen vorwiegend Lösungen von Natriumchlorid oder Natriumnitrat Verwendung finden. Es wird mit relativ hoher Stromdichte gearbeitet. Für die Herstellung von schraubenlinienförmig verlaufenden Nuten 13 an der Mantelfläche des Rohlings 6 wird die rotierbare Plattform 2 in Umdrehung versetzt und gleichzeitig der Support 8 in Richtung des Pfeiles 11 mittels eines hiefür vorgesehenen Antriebes 14 abgesenkt. Durch relative Einstellung der Absenkgeschwindigkeit des Supportes 8 zur Umdrehungsgeschwindigkeit der Plattform 2 läßt sich die gewünschte Form der Nut 13 einstellen. Zur Beschleunigung des Verfahrens sind mit dem Support 8 wenigstens zwei Schablonen 9 verbunden, welche in der Draufsicht, wie sie in Fig.2 dargestellt ist, entsprechende nach innen gerichtete Vorsprünge 15 zur elektrochemischen Abtragung der Nuten 13 aufweisen.

Für die Erzielung einer Verzahnung an der Außenseite des Werkstückes, insbesondere für die Ausbildung einer Schrupp-, Schlicht-, Schleif- oder Schleppverzahnung wird in einem gesonderten Arbeitsschritt bei entsprechend ausgewechselten Schablonen 9 der Antrieb 14 entsprechend gesteuert abgesenkt, wobei der Antrieb zu hin- und hergehender Bewegung erfolgen kann. Bei kontinuierlicher Absenkung mit unterschiedlichen Absenkgeschwindigkeiten läßt sich eine wellige Oberfläche verwirklichen, wobei die Absenkgeschwindigkeit und die Richtung der Bewegung der Schablone 9 in einfacher Weise gesteuert werden kann, solange ein entsprechend rasch reagierender reversierbarer Antrieb 14 für den Support zur Verfügung steht. Eine wellige Oberfläche kann zusätzlich durch eine auf- und abschwellende Steuerung der Stromstärke bei gleichbleibender Bewegung erzeugt werden.

Der wesentliche Aspekt der Erfindung besteht in der Anwendung des an sich bekannten elektrochemischen Senkens bzw. Elysierverfahrens mit relativer Bewegung einer Schablone zu einem Werkzeugrohling zur Herstellung von spanabhebenden Werkzeugen aus gehärtetem und angelassenen Schnellarbeitsstählen. Im besonderen lassen sich auf diese Weise bevorzugt Fräser, Schrupp-, Schlicht-, Schleif-, Läpp- oder Bohrwerkzeuge herstellen. Die Anwendung des Elysierverfahrens bei drehender Relativbewegung eines formgebenden Werkzeuges, welches als Werkzeugelektrode geschaltet ist, zum Zwecke des Bohrens ist bekannt. Auf diese Weise lassen sich Verfahrensweisen, wie das Elysierschleifen, das Elysierdrehen und das Elysierhonen verwirklichen, wobei eine kombinierte elektrochemische und mechanische Abtragung vorgenommen wird. Das erfindungsgemäße Verfahren wendet ein derartiges Elysierverfahren auf die Herstellung formgebender Werkzeuge aus Schnellarbeitsstählen an und ermöglicht dadurch die rasche Herstellung formgebender Werkzeuge mit komplizierten Formgebungen der Werkzeugoberfläche.

Neben dem Einsatz von Schnellstählen bzw. Schnellarbeitsstählen lassen sich spanabhebende Werkzeuge mit Vorteil auch aus elektrisch leitenden Hartmetallen mit dem erfindungsgemäßen Verfahren herstellen.

Die Steuerung des Supportes 8 zur Erzielung entsprechender Werkzeugformen kann hiebei in besonders vorteilhafter Weise durch eine elektronische Prozeßsteuerung vorgenommen werden, wobei eine kontinuierliche Senkrechtbewegung bei gleichzeitiger simultaner Drehbewegung des Werkstückes zur Erzeugung einer spiralförmigen Nut oder eine schrittweise Absenkung um einen vorgegebenen Betrag und anschließendes Oszillieren des Supportes in einer definierten auf- und abgehenden Bewegung zur Erstellung von ringförmigen Nuten, wie sie bei typischen Schruppfräsern vorgesehen sind, bei gleichzeitiger Rechts- und Linksbewegung des Werkstückes mit einer Spiralsteigung vorgenommen werden kann. Darüberhinaus ist es möglich eine sinusförmig auf- und abschwellende Senkrechtbewegung des Supportes mit gleichförmiger simultaner auf- und abschwellender Drehbewegung des Werkstückes vorzunehmen.

Die Vorteile der erfindungsgemäß hergestellten spanabhebenden Werkzeuge lassen sich besonders deutlich an Hand der zu erwartenden Zähigkeitseigenschaften eines Zahngrundes eines derartigen Werkzeuges analysieren. Bei den bekannten Fertigungsmethoden, bei welchen Nuten vorgefräst und anschließend das Werkzeug gehärtet wird, ist die Härte und Zähigkeit des Zahngrundes vergleichbar der Härte der Zahnoberfläche oder Kante. Beim Härten eines zylinderförmigen Rohlings wird aufgrund verminderter Abschreckgeschwindigkeit eine höhere Zähigkeit und geringere Härte des Kernes erreicht. Wenn nun in einem derartigen Rohling Nuten od. dgl. durch elektrochemisches Senken nach dem Härten hergestellt werden, ist ein wesentlich weicherer Zahngrund zu erwarten, welcher zäher und frei von jeglichen scharfkantigen Ecken sowie frei von bei konventioneller Fertigung durch Schleifen auftretenden Schleifrissen ist. Die Festigkeit des Zahngrundes und damit die Festigkeit des Zahnes sowie die kanten- und rissfreie Oberfläche ergeben insgesamt eine wesentlich höhere Stabilität des einzelnen Zahnes und vermeiden im nachfolgenden Einsatz des Fräsers Zahnbrüche.

Die Oberflächengüte des Zahngrundes läßt sich durch entsprechende Steuerung des Vorschubes beeinflussen und verbessern. Bei Fräsern zur Aluminiumbearbeitung ist es beispielsweise möglich, die Ausgestaltung so zu treffen, daß ein verbesserter Spanabfluß auftritt, wobei gleichzeitig geringere Vorschub- und Radialkräfte des Fräsers beobachtet werden.

Durch Verminderung der Reibwirkung des abgespanten Aluminiummaterials bei einem derartigen Fräser an der Oberfläche der Zahngründe wird neben einem besseren Abfluß der Zerspanungswärme durch niedrigere Kontaktwärme zwischen Span- und Zahngrund auch vermieden, daß Aufbauschneiden im Zahngrund entstehen. Zusätzlich ergibt sich eine verbesserte Spanabführung der abgespanten Werkstoffe.

Patentansprüche:

1. Verfahren zum elektrochemischen Senken von spanabhebenden Werkzeugen aus Schnellarbeitsstählen oder elektrisch leitenden Hartmetallen, insbesondere von Fräsern für Schrupp- und Schlichtarbeiten, Bohrern oder dgl., dadurch gekennzeichnet, daß ein gehärteter und angelassener stabförmiger Rohling (6) durch eine der gewünschten Kontur entsprechende, in an sich bekannter Weise als Kathode geschaltete, Schablone (9) überfahren wird und daß das in an sich bekannter Weise als Anode geschaltete Werkstück (2) und/oder die Schablone (9) zu drehender und/oder in Achsrichtung (11) des Rohlings (6) hin- und hergehender Bewegung angetrieben wird (werden).

2. Verfahren nach Anspruch 1, dadurch gekennzeichnet, daß in Achsrichtung (11) des Rohlings (6) wenigstens zwei Schablonen (9) angeordnet sind.

3. Verfahren nach Anspruch 1 oder 2, dadurch gekennzeichnet, daß Schrupp- und/oder Schlichtverzahnungen in von der konturgebenden Behandlung gesonderten Arbeitsschritten abgetragen werden.

4. Verfahren nach Anspruch 1 oder 2, dadurch gekennzeichnet, daß eine wellige Oberfläche durch auf- und abschwellende Stromstärke erzeugt wird.

5. Verfahren nach einem der Ansprüche 1 bis 4, dadurch gekennzeichnet, daß der Rohling (6) relativ zu der oder den Schablone(n) (9) gedreht und gleichzeitig der Rohling (6) und/oder die Schablone(n) (9) in Achsrichtung (11) verschoben wird (werden).

6. Verwendung des Elysierverfahrens mit relativer Bewegung einer Schablone (9) zu einem Werkzeugrohling (6) zur Herstellung von spanabhenden Werkzeugen aus gehärtetem und angelassenem Schnellarbeitsstählen.

7. Verwendung nach Anspruch 6 zur Herstellung von Fräsern, Schrupp-, Schlicht-, Schleif-, Läpp- oder Bohrwerkzeugen.

FIG. 1

FIG. 2